# EUROPEAN PATENT APPLICATION

(11) **EP 2 388 676 A2**
(43) Date of publication of application: **23.11.2011**
(21) Application number: 10170827.9
(22) Date of filing: 26.07.2010
(51) Int. Cl.: G05D 23/13

(54) **Anti-scald thermostatic water tap**

(30) Priority: 23.04.2010 CN 201020175737 U
(71) Applicant: Suprema (Zhuhai J/V) Thermostatic Sanitaryware Co., Ltd, HongWan Industrial Zone Xiangzhou, Zhuhai 519000 (CN)
(72) Inventor: Xie, Qingjun, 519015, Zhuhai (CN)
(74) Representative: Stuttard, Garry Philip

(57) **Abstract**

The invention relates to an anti-scald thermostatic water tap, comprising a valve body, a flow valve core, a thermostatic valve core, a central tube and a connecting tube; the valve body, the central tube and the connecting tube are of hollow structure, the connecting tube is nested in the central tube, and the central tube is nested in the valve body; the central tube is fixed in the valve body; the flow valve core and the thermostatic valve core are arranged in the two ends of the central tube respectively, and the connecting tube is arranged between the thermostatic valve core and the flow valve core; a first cavity is formed between an inner surface of the valve body and an outer surface of the central tube, and is communicated with the cold water inlet of the valve body and a cold water inlet of the central tube to form a cold water channel; a second cavity is formed between an inner surface of the central tube and an outer surface of the connecting tube, and is communicated with the water outlet of the valve body to form a water outlet channel; and a hot water inlet of the central tube is directly communicated with the hot water inlet of the valve body.

## Description

### Field of the Invention

The invention relates to plumbing equipment, in particular to an anti-scald thermostatic water tap with optimized internal structure.

### Description of the Related Art

All thermostatic water taps in use today are molded by casting. The internal water channels of main casting bodies which include cold water channels, hot water channels and mixed water channels isolated by partitions are complicated, which leads to a plurality of casting defects, low casting yield and high cost; and the internal water channels are narrow and their internal walls are rough, which tends to result in water channel blocking or small flow. Meanwhile, improper arrangement of the hot water channels and the cold water channels in the existing thermostatic water taps leads to excessively high temperature of the surfaces of the thermostatic water taps, easily resulting in scald.

### Summary of the Invention

An object of the invention is to provide an anti-scald thermostatic water tap with simple structure.

In order to achieve the object, the invention provides the following technical solution:
An anti-scald thermostatic water tap, comprising a valve body, a flow valve core, a thermostatic valve core, a temperature control handwheel and a flow handwheel; the flow valve core being connected with the flow handwheel; the thermostatic valve core being connected with the temperature control handwheel; the valve body being equipped with a cold water inlet, a hot water inlet and a water outlet;

The anti-scald thermostatic water tap also comprising a central tube and a connecting tube; the valve body, the central tube and the connecting tube being of hollow structure, the connecting tube being nested in the central tube, and the central tube being nested in the valve body; the central tube being fixed in the valve body; the flow valve core and the thermostatic valve core being arranged in the two ends of the central tube respectively, and the connecting tube being arranged between the thermostatic valve core and the flow valve core;

A first cavity being formed between an inner surface of the valve body and an outer surface of the central tube, and being communicated with the cold water inlet of the valve body and a cold water inlet of the central tube to form a cold water channel; a second cavity being formed between an inner surface of the central tube and an outer surface of the connecting tube, and being communicated with the water outlet of the valve body to form a water outlet channel; and a hot water inlet of the central tube being directly communicated with the hot water inlet of the valve body.

One end of the connecting tube is against the inside of the central tube and forms seal between the connecting tube and the central tube by a sealing ring, the other end of the connecting tube is against the flow valve core which is limited into the central tube through engagement of an external thread of its shell body and an internal thread of the central tube; one end of the central tube which nests the thermostatic valve core is against the inside of one end of the valve body , the other end of the central tube is against a compression nut, and the central tube is limited in the valve body.

The central tube comprises a central tube body and a temperature control internal valve body; one end of the central tube body is nested with, against and in seal fit with one end of the temperature control internal valve body, the other end of the central tube body is against the compression nut; the other end of the temperature control internal valve body is against the inside of one end of the valve body ; and the thermostatic valve core is nested in the temperature control internal valve body.

The valve body is made of forged copper, and the central tube and the connecting tube are made of plastic.

The invention replaces all rough partitions in the existing casting valve body with the valve body, the central tube and the connecting tube, which simplifies structure of the valve body, enhances product yield and reduces cost; and the invention increases flow of the water tap by means of the water channels formed by the cavities limited among the valve body, the central tube and the connecting tube. In addition, in the invention cold water flows through the cold water inlet of the valve body into the valve body, then flows through the first cavity formed between the outer surface of the central tube and the inner surface of the valve body into the thermostatic valve core, which causes the cold water channel to surround the water tap, therefore, the water tap is capable of preventing scald on its surface. The invention adopts a temperature sensor to monitor change of the tap water temperature, and automatically adjusts the tap water temperature, bringing people safe and comfortable bathing enjoyment.

### Brief Description of the Drawings

FIG. 1 is a sectional view of the anti-scald thermostatic water tap of embodiment 1 in the invention;
FIG. 2 is a sectional view of the main body of embodiment 1 in the invention;
FIG. 3 is a sectional view of the anti-scald thermostatic water tap of embodiment 2 in the invention;
FIG. 4 is a sectional view of the main body of embodiment 2 in the invention.
The invention is described in detail with accompanying drawings and embodiments.

### Description of the Embodiments

### Embodiment 1

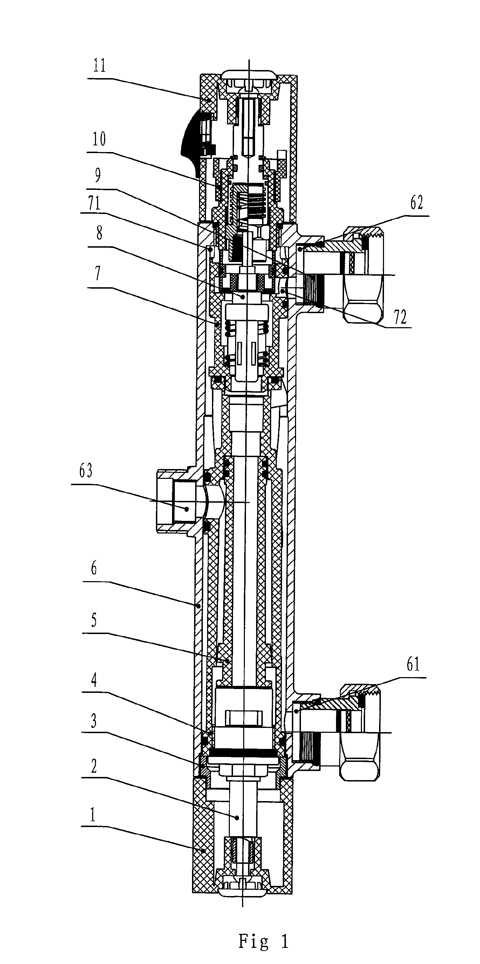

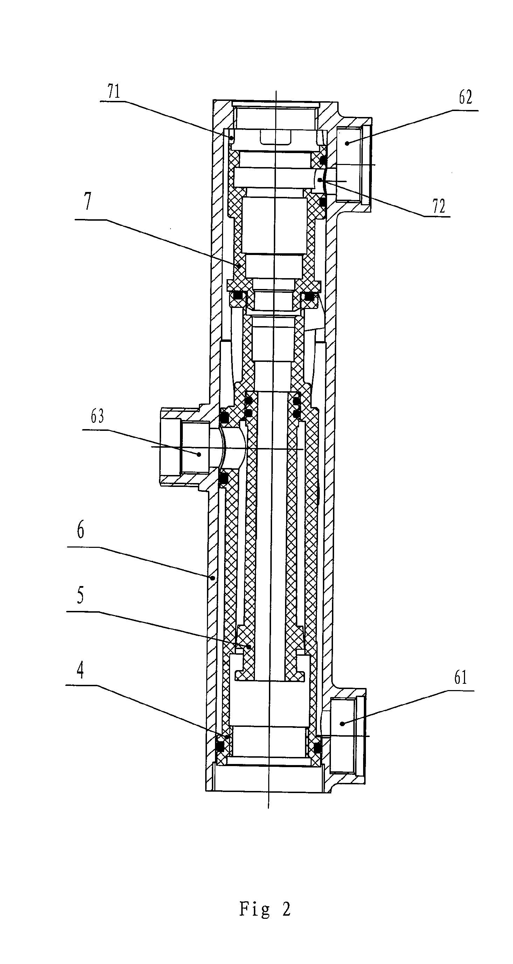

Referring to FIG. 1 and FIG. 2, the invention provides an anti-scald thermostatic water tap with optimized internal structure, comprising a flow handwheel 1, a flow valve core 2, a compression nut 3, a central tube body 4, a connecting tube 5, a valve body 6, a temperature control internal valve body 7, a thermostatic valve core 8, a water supply connector 9, a locating gear ring 10, a temperature control handwheel 11 and sealing rings of different shapes and dimensions. The main body is composed of the central tube body 4, the connecting tube 5, the valve body 6 and the temperature control internal valve body 7, and the two ends of the main body are equipped with the temperature control handwheel 11 and the flow handwheel 1. The central tube is composed of the central tube body 4 and the temperature control internal valve body 7. The valve body 6 is equipped with a cold water inlet 61, a hot water inlet 62 and a water outlet 63. The valve body 6, the central tube body 4 and the connecting tube 5 are of hollow structure; the connecting tube 5 is nested in the central tube body 4, one end of the connecting tube 5 is against the inside of the central tube body 4 and forms seal between the connecting tube 5 and central tube body 4 by a sealing ring, the other end of the connecting tube 5 is against the flow valve core 2 which is limited into the central tube body 4 through engagement of an external thread of its shell body and an internal thread of the central tube body 4; the central tube body 4 is nested in the valve body 6, one end of the central tube body 4 is nested with, against and in seal fit with one end of the temperature control internal valve body 7, the other end of the central tube body 4 is against the compression nut 3; the other end of the temperature control internal valve body 7 is against the inside of one end of the valve body 6 ; thus, the central tube body 4, the connecting tube 5 and the temperature control internal valve body 7 are fixed in the valve body 6. One end of the thermostatic valve core 8 is nested in the temperature control internal valve body 7, and the other end is embedded into and connected with the temperature control handwheel 11, and the thermostatic valve core 8 is fixed on the valve body 6 by an external thread in the middle of the thermostatic valve core 8. The connecting tube 5 is adapted to guide water mixed by the thermostatic valve core 8 to the flow valve core 2. The valve rod end of the flow valve core 2 is connected with the flow handwheel 1.

A first cavity is formed among an inner surface of the valve body 6, an outer surface of the central tube body 4 and an outer surface of the temperature control internal valve body 7 and is communicated with the cold water inlet 61 of the valve body and a cold water inlet 71 of the temperature control internal valve body 7 to form a cold water channel; a second cavity is formed between an inner surface of the central tube body 4 and an outer surface of the connecting tube 5 and is communicated with the water outlet 63 of the valve body to form a water outlet channel; and a hot water inlet 72 of the temperature control internal valve body 7 is directly communicated with the hot water inlet 62 of the valve body.

The valve body 6 is made of forged copper, and the central tube body 4, the connecting tube 5 and the temperature control internal valve body 7 are made of a quality plastic material. The thermostatic valve core 8 is a commercially available valve core having constant temperature function or constant temperature and pressure balance functions, and the flow valve core 2 is a commercially available valve core having flow adjustment function. An O-ring seal is provided between the temperature control internal valve body 7 and the valve body 6. An O-ring seal is provided at one end of the compression nut 3 equipped between the central tube body 4 and the valve body 6.

The operating principle of the anti-scald thermostatic water tap is described below:

Cold water flows through the cold water inlet of the valve body into the valve body, then flows through the first cavity formed by the outer surface of the central tube body 4, the inner surface of the valve body 6 and the outer surface of the temperature control internal valve body 7 into a cavity of the temperature control internal valve body 7. As the cold water channel surrounds the water tap, the water tap is capable of preventing scald on its surface. Hot water directly flows into the cavity of the temperature control internal valve body 7 through the hot water inlet of the valve body, then mixed water adjusted by the thermostatic valve core 8 flows through the inner channel of the connecting tube 5 into the flow valve core 2, and then flows into the water outlet channel after being adjusted by the flow valve core 2, finally flows out from the water outlet. When temperature or pressure of the water in the temperature control internal valve body 7 changes, a temperature sensor in the thermostatic valve core moves a regulator by virtue of thermal expansion and cold shrinkage, thus adjusting flow of the cold water and the hot water and achieving the function of stabilizing water temperature and balancing pressure; moreover, once supply of the cold water is stopped, the mixed water outflow is cut off so that a user does not suffer from scald. The anti-scald thermostatic water tap can be used in a safe and comfortable manner, and saves water and power.

### Embodiment 2

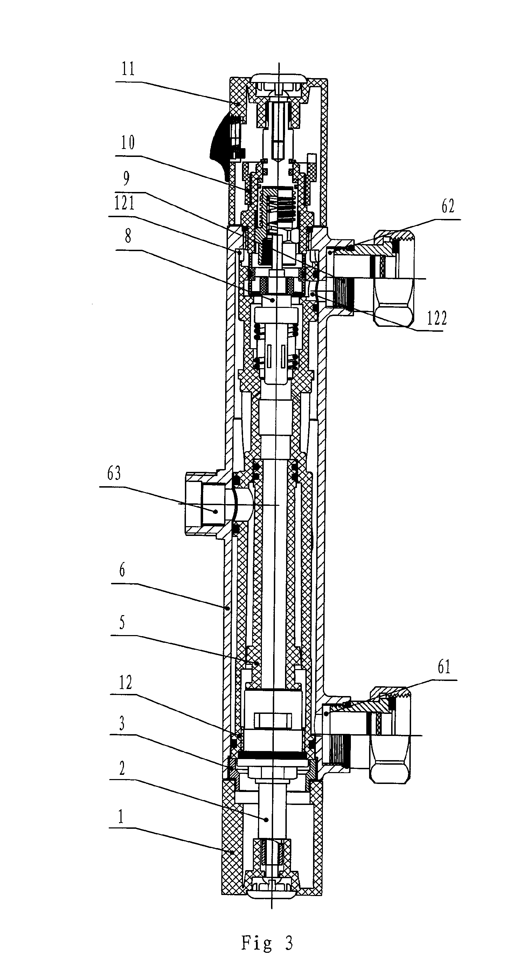

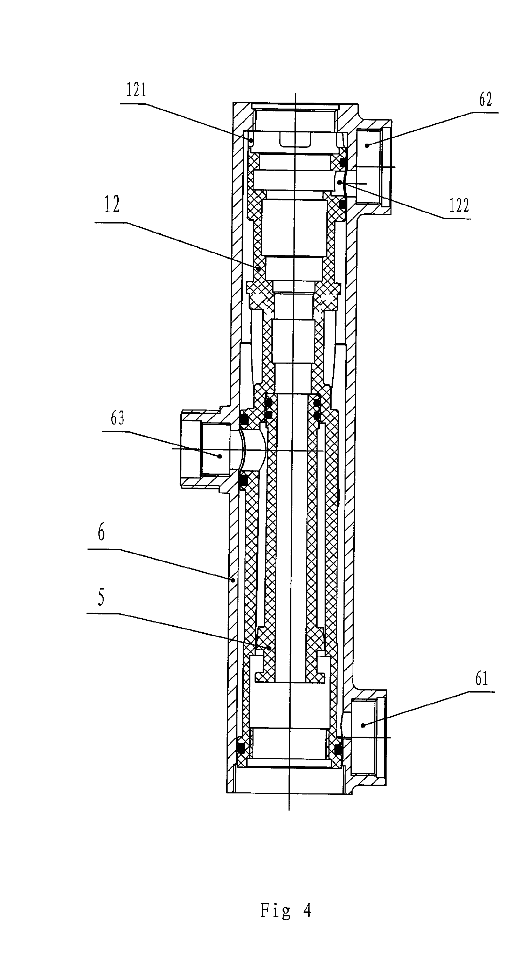

As shown in FIG. 3 and FIG. 4, the embodiment 2 is different from the embodiment 1 in that the central tube body 4 is integrated with the temperature control internal valve body 7 to form a central tube 12, thus the structure is further simplified. One end of the central tube is directly against the inside of one end of the valve body 6 , the other end of the central tube is against the compression nut 3, and the central tube is limited in the valve body 6.

A first cavity is formed between an inner surface of the valve body 6 and an outer surface of the central tube and is communicated with a cold water inlet of the valve body 61 and a cold water inlet of the central tube 121 to form a cold water channel; a second cavity is formed between an inner surface of the central tube and an outer surface of the connecting tube 5 and is communicated with a water outlet 63 of the valve body to form a water outlet channel; and a hot water inlet 122 of the central tube is directly communicated with a hot water inlet 62 of the valve body.

Operating principles: Cold water flows through the cold water inlet of the valve body into the valve body, then flows through the first cavity formed by the outer surface of the central tube 12 and the inner surface of the valve body 6, and flows into a position of the central tube 12 at which the thermostatic valve core is arranged through the cold water inlet of the central tube. As the cold water channel surrounds the water tap, the water tap is capable of preventing scald on its surface. Hot water directly flows to the position of the central tube 12 at which the thermostatic valve core is arranged through the hot water inlet of the valve body, then the mixed water adjusted by the thermostatic valve core 8 flows through the inner channel of the connecting tube 5 into the flow valve core 2, and then flows the water outlet channel after being adjusted by the flow valve core 2, and finally flows out from the water outlet. When temperature or pressure of the water in the temperature control valve core changes, a temperature sensor in the thermostatic valve core moves a regulator by thermal expansion and cold shrinkage, thus adjusting flow of the cold water and the hot water and achieving the function of stabilizing water temperature and balancing pressure; moreover, once supply of the cold water is stopped, the mixed water outflow is cut off so that a user does not suffer from scald. The anti-scald thermostatic water tap is used in a safe and comfortable manner and saves water and power.

Certainly, the anti-scald thermostatic water tap with optimized structure of the invention may have other modifications. In a word, apparent modifications according to the embodiments and other changes without departing from the essence of the invention shall all be incorporated in the scope of the claims.

## Claims

1. An anti-scald thermostatic water tap comprising a valve body, a flow valve core, a thermostatic valve core, a temperature control handwheel and a flow handwheel, wherein the flow valve core is connected to the flow handwheel, the thermostatic valve core is connected to the temperature control handwheel and the valve body is equipped with a cold water inlet, a hot water inlet and an water outlet, **characterized in that**:
the water tap comprises a central tube and a connecting tube, wherein the valve body, the central tube and the connecting tube are of a hollow structure, the connecting tube is nested in the central tube and the central tube is nested in the valve body, wherein the central tube is fixed in the valve body and the flow valve core and the thermostatic valve core are arranged in the two ends of the central tube respectively, wherein the connecting tube is arranged between the thermostatic valve core and the flow valve core; and
a first cavity is formed between an inner surface of the valve body and an outer surface of the central tube and communicates with the cold water inlet of the valve body and a cold water inlet of the central tube to form a cold water channel, wherein a second cavity is formed between an inner surface of the central tube and an outer surface of the connecting tube and communicates with the water outlet of the valve body to form a water outlet channel, wherein a hot water inlet of the central tube communicates directly with the hot water inlet of the valve body.

2. A anti-scald thermostatic water tap as claimed in claim 1 **characterized in that** one end of the connecting tube is against the inside of the central tube and forms a seal between the connecting tube and the central tube by a sealing ring, wherein the other end of the connecting tube is against the flow valve core which is limited into the central tube through engagement of an external thread of its shell body and an internal thread of the central tube, wherein one end of the central tube which nests the thermostatic valve core is against the inside of one end of the valve body, the other end of the central tube is against a compression nut and the central tube is limited in the valve body.

3. The anti-scald thermostatic water tap as claimed in claim 1 or 2, **characterized in that** the central tube comprises a central tube body and a temperature control internal valve body, wherein one end of the central tube body is nested with, against and in seal fit with one end of the temperature control internal valve body and the other end of the central tube body is against the compression nut, wherein the other end of the temperature control internal valve body is against the inside of one end of the valve body and the thermostatic valve core is nested in the temperature control internal valve body.

4. The anti-scald thermostatic water tap as claimed in claim 3, **characterized in that** the valve body is made of forged copper, and the central tube body, the connecting tube and the internal temperature control valve body are made of plastic.

5. The anti-scald thermostatic water tap as claimed in claim 1 or 2, **characterized in that** the valve body is made of forged copper, and the central tube and the connecting tube are made of plastic.
